Europäisches Patentamt

European Patent Office

Office européen des brevets

(19)

(11) Veröffentlichungsnummer: **0 259 543**
**B1**

(12) **EUROPÄISCHE PATENTSCHRIFT**

(45) Veröffentlichungstag der Patentschrift: **19.09.90**

(21) Anmeldenummer: **87106055.4**

(22) Anmeldetag: **25.04.87**

(51) Int. Cl.⁵: **B 01 D 17/022,** C 02 F 1/40,
B 01 D 29/50

(54) Nachreiniger für in Leichtflüssigkeitsabscheidern vorbehandelte Abwässer.

(30) Priorität: **26.08.86 DE 3628979**

(43) Veröffentlichungstag der Anmeldung:
**16.03.88 Patentblatt 88/11**

(45) Bekanntmachung des Hinweises auf die
Patenterteilung:
**19.09.90 Patentblatt 90/38**

(84) Benannte Vertragsstaaten:
**AT BE CH DE FR IT LI LU NL**

(56) Entgegenhaltungen:
**CA-A- 996 037**
**DE-A-3 329 924**
**DE-U-8 324 892**

(73) Patentinhaber: **PASSAVANT-WERKE AG**
**D-6209 Aarbergen 7 (DE)**

(72) Erfinder: **Diefenbach, Günter**
**Im alten Hof**
**D-6255 Dornburg-Frickhofen (DE)**

Courier Press, Leamington Spa, England.

EP 0 259 543 B1

## Beschreibung

Die Erfindung betrifft Nachreiniger für in Leichtfluüssigkeitsabscheidern vorbehandelte Abwässer.

Abwässer, die abscheidbare Verunreinigungen aufweisen, müssen vor ihrer Einleitung in eine Kläranlage oder einen Vorfluter einer Behandlung in einem Schwerkraftabscheider unterworfen werden. Hier wird der größte Teil der auschwimm- und absetzbaren Verunreinigungen zurückgehalten.

Es gibt Verunreinigungen, die wegen ihrer Teilchengröße oder ihres geringen Dichteunterschieds zu Wasser im Schwerkraftabscheider nicht abgetrennt werden. Hierfür setzt man in jüngster Vergangenheit zunehmend Adsorptions/Koaleszenzfilter ein. Diese Filter enthalten vorzugsweise mehrere Lagen Filtermasse, die nacheinander durchströmt werden (DE—GM 84 11 291).

Ein Problem bei diesen Filtern ist die Reinigung der Filtermasse. Es wurde schon vorgeschlagen, jede Lage mit einer Rückspülvorrichtung zu versehen, so daß jede Lage entsprechend ihrer Verschmutzung individuell gereinigt werden kann. Solche Rückspüleinrichtungen sind zwar sehr wirksam, sie komplizieren und verteuern aber die Nachreinigungsanlage erheblich. Außerdem stehen die Kosten für die Rückspüleinrichtungen der untersten Lagen, die nur in sehr großen Zeitabständen gereinigt werden müssen, in keinem Verhältnis zu ihrer tatsächlichen Nutzung. Es wurde daher weiterhin vorgeschlagen, diejenigen Lagen, die am schnellsten erschöpft sind, nicht mehr rückzuspülen, sondern auszutauschen (DE—GM 84 11 291). Diese Bauart befriedigt aber ebenfalls noch nicht vollständig, weil jetzt nebeneinander rückspülbare und austauschbare Filterlagen angewendet werden.

Bei der Aufgabe, hier eine Vereinfachung zu finden, wurde daher von der Überlegung ausgegangen, daß es zweckmäßiger und billiger ist, alle Filterlagen leicht ausbaubar zu machen und sie für den Austausch oder die Reinigung außerhalb des Filterbehälters vorzubereiten. Die Erfindung besteht demgemäß darin, daß jede Lage mindestens ein Stützrohr aufweist und daß die Stützrohre höherer Lagen über die Stützrohre tieferer Lagen gesteckt sind. Bei runden oder polygonalen Abscheidebehältern besitzt jede Lage vorzugsweise ein zentrales Stützrohr. Mit Hilfe Stützrohre können die Filterlagen nicht nur auf den richtigen Abstand gebracht werden, die oberen Enden der Stützrohre können auch als Hebehilfen dienen, die alle auf gleicher Höhe liegen.

Die Filterlagen sind vorteilhafterweise oben und unten von Stützgittern eingefaßt, die am Stützrohr befestigt sind. Zum Auswechseln der Filterlage braucht nur das obere Stützgitter entfernt zu werden. Das nach unten überkragende Ende jedes Stützrohrs stützt sich dann auf dem oberen Schließgitter der nächst tieferen Lage ab.

Eine der Vereinfachung und Verbilligung dienende Maßnahme ist es, die Lagen des Filtermaterials unmittelbar an der Behälterwand anliegen zu lassen; auf diese Weise kann ein Filterkorb ganz entfallen, une eine Dichtung am Umfang ist ebenfalls nicht mehr nötig, wenn die Lagen ein geringes Übermaß gegenüber der lichten Weite des Bahälters haben. Da insbesondere aus Beton gefertigte Behälter eine geringe Formschräge haben, lassen sich die Lagen sehr leicht nach oben herausziehen.

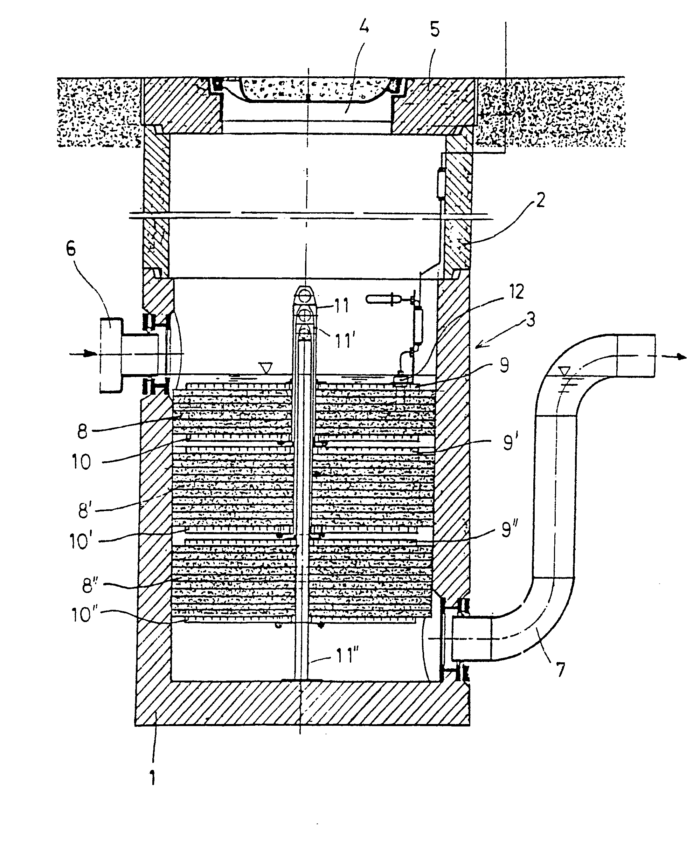

In der Zeichnung, die einen axialen Vertikalschnitt darstellt, ist ein Ausführungsbeispiel der Erfindung gezeigt.

Der aus einem Bodenteil 1 und einem Aufsatzring 2 bestehende zylindrische Behälter 3 ist oben durch eine mit einer Kontrollöffnung 4 versehenen Platte 5 abgedeckt. Der obere Zulauf 6 und der untere Ablauf 7 bewirken eine vertikal nach unten gerichtete Durchströmung. Zwischen den beiden Anschlüssen ist der Behälter mit insgesamt drei Filterlagen 8, 8', 8'' gefüllt, die jeweils aus mehreren Mattenzuschnitten bestehen. Die Zuschnitte werden durch obere und untere Stützgitter 9 9', 9'', 10, 10', 10'' zusammengehalten.

Jeder Filterlage 8, 8', 8'' ist ein Stützrohr 11, 11', 11'' zugeordnet, an dem die Stützgitter befestigt sind. Die Durchmesser der Stützrohre steigen von unten nach oben, so daß alle drei Filterlagen übereinandergesteckt werden können. Das Stützrohr 11'' der untersten Lage 8'' ist als Fuß nach unten verlängert, während die übrigen Stützrohre nur so viel nach unten verlängert sind, daß sich ein ausreichender Abstand zwischen den Lagen ergibt. Die oberen Enden aller Stützrohr sind als Aufhängeöse für eine Hebeeinrichtung ausgebildet. Die lichte Weite des Aufsatzrings 2 ist gegenüber dem Bodenteil 1 größer, so daß die Filterlagen, die sich dichtend an die Behälterwand anlegen, nach Abheben der Platte 5 leicht herausgehoben werden können. In die oberste Filterlage ist noch ein Ölfühler 12 gesteckt, de mit einem externen Überwachungsgerät verbunden ist und bei Erreichen einer vorgegebenen Ölschicht Alarm gibt. Vor dem Herausheben der Filterlagen wird dieser Ölfühler abgenommen.

## Patentansprüche

1. Nachreiniger für in Leichtflüssigkeitsabscheidern vorbehandelte Abwässer, enthaltend mehrere Lagen (8, 8', 8'') koaleszierend und/oder adsorbierend wirkender Filtereinsätze, die übereinander in einem im wesentlichen vertikal durchströmten Behälter (3) angeordnet sind dadurch gekennzeichnet, daß jede Lage (8, 8', 8'') mindestens ein Stützrohr (11, 11', 11'') aufweist und daß die Stützrohre (11, 11') höherer Lagen (8, 8') über die Stützrohre (11', 11'') tieferer Lagen (8', 8'') gesteckt sind.

2. Nachreiniger nach Anspruch 1, bei dem der Behälter (3) im Horizontalschnitt ein kreisförmiges oder polygonales Profil hat, dadurch gekennzeichnet, daß je Lage (8, 8', 8'') ein zentrales Stützrohr (11, 11', 11'') vorgesehen ist.

3. Nachreiniger nach Anspruch 1 oder 2, dadurch gekennzeichnet, daß jede Lage (8, 8', 8'')

ein unteres Stützgitter (10, 10', 10'') für die Filterschichten (8, 8', 8'') aufweist, das mit dem jeweils zugehörigen Stützrohr (11, 11', 11'') verbunden ist.

4. Nachreiniger nach Anspruch 1, 2 oder 3, dadurch gekennzeichnet, daß jede Lage (8, 8', 8'') oben durch ein am jeweils zugehörigen Stützrohr (11, 11', 11'') befestigtes Schließgitter (9, 9', 9'') abgedeckt ist.

5. Nachreiniger nach Anspruch 4, dadurch gekennzeichnet, daß sich das Stützrohr (11, 11') einer höheren Lage (8, 8') auf dem Schließgitter (9', 9'') der jeweils niedrigen Lage (8', 8'') abstützt.

6. Nachreiniger nach Anspruch 5, dadurch gekennzeichnet, daß das Stützrohr (11, 11', 11'') unten um einen den Abstand zur nächstniedrigeren Lage (8', 8'') bzw. zum Behölterboden (1) bestimmenden Betrag übersteht.

7. Nachreiniger nach einem der vorstehenden Ansprüche dadurch gekennzeichnet, daß die Stützrohre (11, 11', 11'') oben mit einer Aufhängeöse versehen sind.

8. Nachreiniger nach einem der vorstehenden Ansprüche, dadurch gekennzeichnet, daß sich die Lagen (8, 8', 8'') ohne Einfassung unmittelbar an die Behälterwand anlegen.

9. Nachreiniger nach Anspruch 8, dadurch gekennzeichnet, daß die Lagen (8, 8', 8'') ein geringes Übermaß gegenüber der lichten Weite des Behälters (3) haben.

## Revendications

1. Installation de post-épuration pour les eaux résiduaires, déjà traitées dans un séparateur à liquides peu visqueuses, consistant en plusieurs couches filtrantes (8, 8', 8'') de fonctionnement coalescent et/ou absorbant superposées dans un récipient (3) à courant principalement vertical, caractérisé en ce que chaque couche (8, 8', 8'') est munie au moins d'un tube-support (11, 11', 11'') et que les tubes-support (11, 11') des couches supérieures (8, 8') sont fixés sur les tubes-support (11', 11'') des couches inférieures (8', 8'').

2. Installation de post-épuration selon revendication 1 constituée d'un récipient (3) ayant en coupe horizontale un profil rond ou polygonal, caractérisé en ce que chaque couche est munie d'un tube-support central (11, 11', 11'').

3. Installation de post-épuration selon revendication 1 ou 2, caractérisé en ce que chaque couche filtrante (8, 8', 8'') est munie d'un grillage-support inférieur (10, 10', 10'') chacun étant relié au tube-support correspondant (11, 11', 11'').

4. Installation de post-épuration selon revendication 1, 2 ou 3, caractérisé en ce que chaque couche (8, 8', 8'') est recouverte en haut par un grillage (9, 9', 9'') chacun étant relié au tube-support correspondant.

5. Installation de post-épuration selon revendication 4, caractérisé en ce que le tube-support (11, 11') d'une couche supérieure (8, 8') s'appuie au grillage (9, 9') de la couche inférieure (8', 8'').

6. Installation de post-épuration selon revendication 5, caractérisé en ce que le tube-support (11, 11', 11'') fait saillie à son extrémité inférieure déterminant ainsi la distance à la couche sous-jacente (8,', 8'') ou au fond du récipient (1).

7. Installation de post-épuration selon l'une des revendications précédentes, caractérisé en ce que les tubes-support (11, 11', 11'') sont munis d'un oeuil de suspension.

8. Installation de post-épuration selon l'une des revendications précédentes, caractérisé en ce que les couches (8, 8', 8'') reposent sans cadre directement au paroi du récipient.

9. Installation de post-épuration selon revendication 8, caractérisé en ce que les couches (8, 8', 8'') ont été surdimensionnées légèrement à l'égard de la largeur intérieure du récipient (3).

## Claims

1. An aftercleaning system for waste water which has been pre-treated in separators for light liquids comprising several layers (8, 8', 8'') of coalescent and/or adsorbent filter material stacked within a tank (3) showing essentially a vertical flow direction characterized in that each layer (8, 8', 8'') is provided at least with one support-pipe (11, 11', 11'') and that the support-pipes (11, 11') of the upper layers (8, 8') are placed onto the support-pipes (11', 11'') of the lower layers (8', 8'').

2. An aftercleaning system as claimed in claim 1 in which the tank (3) presents a circular or polygonal cross section characterized in that each layer (8, 8', 8'') is provided with a central support-pipe (11, 11', 11'').

3. An aftercleaning system as claimed in claim 1 or 2 in which each layer (8, 8', 8'') is provided with a lower supporting grate (10, 10', 10'') for the filter beds (8, 8', 8'') connected to the corresponding support-pipe (11, 11', 11'').

4. An aftercleaning system as claimed in claim 1, 2 or 3 in which each layer (8, 8', 8'') is covered by a closing grate (9, 9', 9'') connected to the corresponding support-pipe (11, 11', 11'').

5. An aftercleaning system as claimed in claim 4 in which each support-pipe (11, 11') of the upper layers (8, 8') is sustained by the closing grate (9', 9'') of the next lower layer (8', 8'').

6. An aftercleaning system as claimed in claim 5 in which the support-pipe (11, 11', 11'') protrudes by a certain amount determining the distance to the next lower layer (8', 8'') or to the tank bottom (1).

7. An aftercleaning system as claimed in any preceding claim in which the support-pipes (11, 11', 11'') are provided at the upper end with a suspension shackle.

8. An aftercleaning system as claimed in any preceding claim in which the layers (8, 8', 8'') sit close to the tank walls without any framing.

9. An aftercleaning system as claimed in claim 8 in which the layers (8, 8', 8'') are slightly wider than the nominal width of the tank (3).